# FASCICULE DE BREVET EUROPEEN

(11) **EP 2 658 471 B1**
(45) Date de publication et mention de la délivrance du brevet: **10.04.2019**
(21) Numéro de dépôt: 11805532.6
(22) Date de dépôt: 27.12.2011
(51) Int. Cl.: A61C 7/28, A61C 7/30

(54) **ENSEMBLE FORME PAR UNE ATTACHE, UN CLIP ET UNE BASE POUR APPAREIL ORTHODONTIQUE, ET APPAREIL ORTHODONTIQUE LE COMPORTANT**
ANHAND EINER BEFESTIGUNG GEFORMTE ANORDNUNG, KLAMMER UND BASIS FÜR EINE ORTHODONTISCHE VORRICHTUNG SOWIE ORTHODONTISCHE VORRICHTUNG DAMIT
ASSEMBLY FORMED BY AN ATTACHMENT, A CLIP AND A BASE FOR AN ORTHODONTIC APPLIANCE, AND ORTHODONTIC APPLIANCE COMPRISING SAME

(30) Priorité: 28.12.2010 FR 1061309; 05.01.2011 US 201161429893 P
(43) Date de publication de la demande: 06.11.2013
(73) Titulaire: American Orthodontics Corporation, Sheboygan, WI 53081-1048 (US)
(72) Inventeur: CURIEL, Patrick, F-92200 Neuilly sur Seine (FR); SALAH, Philippe, F-75020 Paris (FR); AYACHE, William, F-92200 Neuilly sur Seine (FR)
(74) Mandataire: Von Rohr Patentanwälte Partnerschaft mbB
(86) Numéro de dépôt international: PCT/EP2011/074093
(87) Numéro de publication internationale: WO 2012/089731

(56) Documents cités:
- EP-A1- 1 234 549
- EP-A2- 1 287 789
- WO-A1-2010/103178
- DE-A1- 4 407 100
- US-A1- 2004 166 459
- US-A1- 2007 166 658

## Description

L'invention concerne un ensemble base/attache à utiliser dans un appareillage orthodontique individualisé pour le traitement d'un patient, destiné principalement, mais non exclusivement, à être utilisé dans le cas d'une technique linguale, c'est-à-dire avec l'appareil disposé sur la face postérieure non visible des dents.

Classiquement, de tels appareils comportent :
- au moins un arc orthodontique, autrement dit un fil métallique exerçant sur les dents un effort tendant à les amener, à partir de leur position initiale insatisfaisante, dite « mal position », à une position finale satisfaisante, dite « position corrigée » ;
- et une série d'attaches, dites aussi couramment « brackets », pourvues chacune d'au moins une gorge pour la réception d'un arc orthodontique.

Les attaches sont fixées individuellement sur les dents du patient, dans une position déterminée permettant à l'arc orthodontique de transférer sur les dents les efforts nécessaires pour qu'elles passent de la mal position à la position corrigée pendant le traitement. Cette fixation est réalisée par l'intermédiaire d'une « base », c'est à dire d'un élément intermédiaire dont une face épouse la surface de la dent sur laquelle l'attache doit être fixée, et dont l'autre face supporte l'attache.

Le plus couramment, un ou plusieurs arcs orthodontiques, et avec lui ou eux une seule série d'attaches comportant chacune une ou plusieurs gorges, sont utilisés.

Les techniques orthodontiques linguales, qui ont l'avantage esthétique de laisser l'appareillage pratiquement invisible depuis l'extérieur, ont commencé à se développer vers 1980. Dans leur cas, un élément important de la réussite du traitement est le bon positionnement de l'attache et de sa gorge sur la dent, puisque ce positionnement détermine l'orientation des efforts qui sont imposés à la dent correspondante, et donc les orientations de la dent dans les différentes directions de l'espace lorsqu'elle se trouvera en position finale corrigée. Ce positionnement est beaucoup plus délicat à réaliser en technique linguale qu'en technique dite labiale ou vestibulaire (où l'appareillage est disposé sur la face antérieure des dents), du fait de l'angulation importante des faces postérieures des dents. Cette angulation fait qu'une légère erreur de positionnement de l'attache peut placer la gorge dans une mauvaise position, incapable d'assurer la correction souhaitée de la position de la dent.

Les techniques informatiques ont pu apporter des perfectionnements importants dans la facilité de conception d'appareillages orthodontiques individualisés, spécifiques à chaque patient.

En particulier dans le document WO-A-03/068099, on enseigne de concevoir de manière individualisée un ensemble formé d'une part par l'image virtuelle d'une base de fixation à la dent, conçue numériquement à partir d'une image informatique de l'arcade du patient avec les dents en mal position, et d'autre part une image virtuelle d'une attache pourvue d'une gorge pour l'insertion de l'arc orthodontique, cette image étant puisée dans une bibliothèque virtuelle d'attaches de formes prédéterminées. On réalise ensuite par prototypage rapide une attache formée d'un corps unique résultant de la combinaison de ces deux images. Puis on conçoit un arc orthodontique, conformé à l'aide d'un dispositif spécial, destiné à relier les attaches et à amener les dents du patient dans la position corrigée.

Après l'insertion de l'arc orthodontique dans la gorge de l'attache, cette gorge est obturée par le praticien de manière à y maintenir l'arc. Le plus classiquement, cette obturation est réalisée par insertion dans la gorge d'une ligature métallique ou élastomérique. Cependant, cette méthode a pour inconvénient de ne pas avoir une fiabilité optimale, du fait que la ligature peut ne pas être installée correctement par le praticien et peut voir ses propriétés s'altérer au fil du temps,notamment pour une ligature élastomérique. Si la ligature est déplacée ou détruite, le patient doit se déplacer au cabinet de l'orthodontiste pour la faire remplacer. Egalement, la réalisation soignée de chaque ligature prend beaucoup de temps, ce qui rend la mise en place de l'arc longue et inconfortable pour le patient. Enfin, si au cours du traitement il est nécessaire de changer l'arc, il faut que l'orthodontiste détruise de façon irréversible les ligatures pour enlever l'arc, ce qui là encore est long et inconfortable pour le patient. Et cette étape de destruction de la ligature conduit l'orthodontiste à exercer des efforts qui se transmettent à l'attache et peuvent fragiliser sa liaison avec la base.

Un progrès considérable a constitué en l'utilisation d'attaches dites « auto-ligaturantes ». Ces attaches sont adaptées pour recevoir un clip élastique (métallique) qui, après l'insertion de l'arc, est mis en place à une position qui obture la gorge et permet au clip d'empêcher la sortie de l'arc. Cette mise en place s'opère généralement par un glissement du clip selon la direction longitudinale de l'attache entre une position d'attente laissant la gorge ouverte pour l'insertion de l'arc et une position fonctionnelle fermée obturant la gorge, glissement qui peut être complété par un mouvement de rotation comme dans le document US-A-6 776 613. Le déplacement du clip est réalisé manuellement par l'orthodontiste au moyen d'un de ses outils habituels et ne dure qu'une fraction de seconde. De même, le dégagement du clip préalable à un changement d'arc est réalisé par une simple traction exercée en sens inverse du glissement précédent, et est aussi très rapide. Enfin, les caractéristiques mécaniques et dimensionnelles du clip métallique sont stables dans le temps, et si l'attache et le clip ont été réalisés avec une bonne précision dimensionnelle, la fonctionnalité et la fiabilité de la ligature sont satisfaisantes.

Les attaches autoligaturantes connues ont cependant aussi leurs inconvénients. Elles sont souvent plus encombrantes que les attaches ordinaires, donc plus gênantes pour le patient, du fait que le mouvement longitudinal de glissement du clip doit pouvoir être assuré sur une certaine course. Surtout, ce mouvement de glissement peut être gêné si du tartre s'est accumulé sur l'attache car il n'a pas été éliminé par un bon brossage de l'appareil en bouche par le patient. Lors d'un changement d'arc, l'ouverture et le replacement du clip sont alors rendus plus difficiles et on perd au moins partiellement l'un des avantages des attaches auto-ligaturantes.

Un autre inconvénient des attaches auto-ligaturantes connues dans lesquelles le clip est déplacé par glissement entre sa position ouverte et sa position fermée et réciproquement est le suivant.

Les bases ont intérêt à être les plus minces possibles pour que l'encombrement global en hauteur de l'ensemble base/attache soit le plus réduit possible, afin de limiter l'inconfort du patient. On peut, à cet effet, penser à fabriquer une base dont l'épaisseur diminue par rapport à son épaisseur nominale (qui est de l'ordre de 0,4 de mm habituellement) dans la zone qui supporte l'attache. Dans la zone de support il serait bon de pouvoir réduire l'épaisseur de la base à 0,1 mm environ, sachant que même un gain de 0,3 mm sur l'épaisseur de l'ensemble base/attache pour tous les ensembles installés sur l'arcade traitée procure déjà un gain de confort appréciable au patient.

Cependant, comme on le verra dans la suite de l'exposé, on ne peut pas se limiter à réduire cette épaisseur de la base dans cette zone de support. En effet, il faut pouvoir faire glisser le clip sur une certaine course rectiligne pour pouvoir le mettre en place et l'enlever, et cela nécessite de disposer devant l'attache d'un espace dégagé à cet effet sur une longueur suffisante. La partie amincie de la base devrait donc alors avoir une grande surface, et cela affaiblirait la résistance de la base d'une façon rédhibitoire.

Le document US 2007/166658 A1 divulgue un ensemble destiné à faire partie d'un appareil orthodontique selon le préambule de la revendication 1.

Le document WO 2010/103178 A1 divulgue un ensemble destiné à faire partie d'un appareil orthodontique comportant un clip de fixation d'un arc orthodontique, ledit clip présentant une gorge pour la fixation dudit arc.

Le but de l'invention est de proposer aux orthodontistes un ensemble formé par une attache auto-ligaturante, le clip assurant la fermeture de la gorge de l'attache et la base sur laquelle est montée l'attache, dont la configuration permette de réduire sensiblement l'épaisseur maximale de l'ensemble sans empêcher les déplacements du clip et sans affecter significativement la solidité de la base.

A cet effet, l'invention a pour objet un ensemble destiné à faire partie d'un appareil orthodontique, comportant :
- une attache auto-ligaturante, ladite attache présentant selon sa direction longitudinale une face externe et une face occlusale et étant pourvue sur sa face externe d'une gorge pour la réception d'un arc orthodontique ;
- un clip élastique déplaçable de manière réversible entre une position ouverte laissant un passage libre pour l'insertion de l'arc dans la gorge ou l'extraction de l'arc hors de la gorge et une position fermée obturant la gorge ;
- et une base présentant une face externe et une face occlusale, ladite face externe de la base supportant ladite attache et ladite face occlusale de la base étant destinée à reposer sur une dent du patient en épousant la surface de ladite dent ;
caractérisé en ce que ledit clip est déplaçable selon un mouvement au moins partiellement rotatif entre sa position ouverte et sa position fermée, et en ce que ladite base comporte dans la zone où elle supporte l'attache une dépression au moins partiellement en forme de cuvette, le clip venant s'insérer dans ladite dépression lorsqu'il est en position fermée..

Le déplacement du clip entre lesdites positions peut s'effectuer essentiellement selon un mouvement de rotation, sans glissement en translation rectiligne du clip.

Le déplacement du clip entre lesdites positions peut s'effectuer essentiellement selon un mouvement de rotation, puis de glissement en translation rectiligne du clip ou inversement.

Le clip peut être en forme de U sur au moins une partie de sa longueur.

La dépression de la base peut présenter sur son fond un promontoire destiné à supporter l'attache.

La dépression de la base peut présenter sur son fond un promontoire destiné à supporter l'attache.

L'ensemble peut être destiné à un appareil orthodontique du type lingual.

L'ensemble peut être destiné à un appareil orthodontique de type vestibulaire.

L'invention a pour objet un appareil orthodontique comportant un arc orthodontique et des ensembles comportant chacun une attache, un clip et une base, destinés à être montés chacun sur une dent d'un patient, caractérisé en ce que au moins un desdits ensembles est du type précédent.

Comme on l'aura compris, l'invention repose sur une nouvelle conception de l'ensemble formé par une attache auto-ligaturante, le clip qui obture sa gorge et la base qui supporte l'attache. D'une part le clip présente sur une partie ou la totalité de sa longueur une forme courbée, par exemple en U, qui lui permet de se déplacer sur l'attache en effectuant un mouvement de rotation. La base, dont l'épaisseur nominale est conforme aux standards habituels, présente une dépression en forme de cuvette dans la zone supportant l'attache, donc une diminution d'épaisseur progressive et seulement localisée, ce qui fait que globalement sa solidité n'est pas affectée par rapport au cas où elle serait d'une épaisseur constante habituelle. Lors de l'opération de fermeture du clip, une partie terminale du clip vient se loger dans la dépression, sous le corps de l'attache qui présente une ouverture à cet effet.

L'invention sera mieux comprise à la lecture de la description qui suit, faisant référence aux figures annexées suivantes :
- la figure 1 qui représente schématiquement en section longitudinale un ensemble attache/clip/base fictif non conforme à l'invention, mettant en oeuvre le principe d'une base pourvue d'une dépression mais faisant usage d'un clip se déplaçant purement en translation ;
- la figure 2 qui représente schématiquement en section longitudinale un exemple d'ensemble attache/clip/base conforme à l'invention
- la figure 3 qui représente schématiquement en section longitudinale un autre exemple d'ensemble attache-clip selon l'invention, avec le clip en position ouverte ;
- la figure 4 qui représente ce même ensemble avec le clip en position fermée.

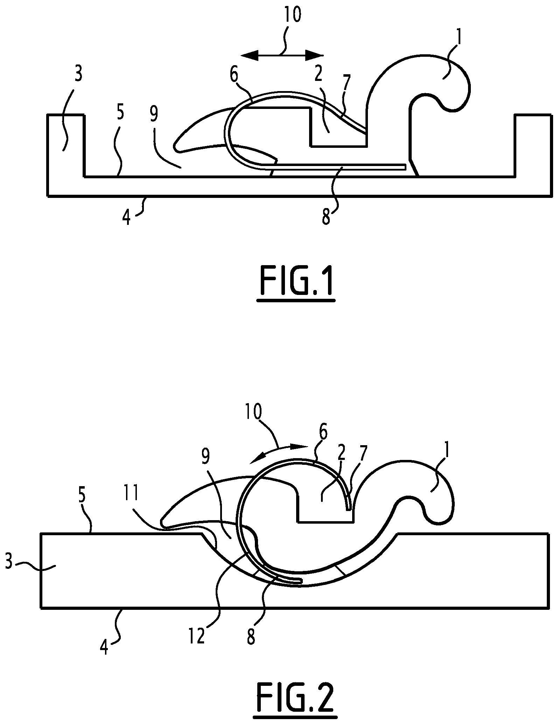

Les termes « horizontal » et « vertical » qui seront employés dans la suite de la description le seront par référence aux figures 1 et 2 et à la position qu'y occupent les dispositifs représentés, mais la transposition de ces termes à d'autres positions des dispositifs sera évidente pour le lecteur homme du métier.

Dans l'ensemble fictif non conforme à l'invention de la figure 1, qui n'est représenté que pour montrer que tous les éléments qui seront ultérieurement cités comme faisant partie de l'invention sont bien indispensables, on remarque les éléments suivants :
- une attache 1 comportant sur sa face externe une gorge 2 pour l'insertion d'un arc orthodontique non représenté ;
- une base 3 dont la face occlusale 4 est destinée à être fixée sur une face linguale ou vestibulaire d'une dent du patient, et dont la face externe 5 porte l'attache 1 ;
- et un clip élastique 6 de forme générale en U dans l'exemple représenté, dont une première branche 7 peut obturer la gorge 2 et dont la deuxième branche 8 est logée entre la base 4 et l'attache 1 lorsque la gorge 2 est obturée, comme représenté sur la figure 1.

L'attache 1 est placée sur la base 3 dans une dépression 9 pour que la hauteur globale maximale de l'ensemble base/attache soit aussi réduite que possible.

On voit que, pour pouvoir déplacer en translation le clip 6 entre ses positions ouverte et fermée selon la flèche 10, il faut disposer d'un espace suffisant devant l'attache 1. Ce n'est possible que si la dépression 9 a une dimension qui excède largement celle de l'attache 1. Cela a pour conséquence que l'épaisseur de la base 3 se trouve considérablement réduite sur une grande portion de la surface de la base 3. Elle passe, par exemple d'une valeur de 0,4 mm à une valeur de 0,1 mm. Cela conduit à une fragilisation excessive de la base 3.

L'invention permet de remédier à ce problème, en prévoyant que l'attache 1 et le clip 6 aient des formes telles que les mouvements du clip 6 lors des opérations de fermeture et d'ouverture de la gorge 2 soient des mouvements de rotation sur au moins une partie de la course du clip 6, voire de préférence sur la totalité de cette course comme dans l'exemple schématisé sur la figure 2. La trajectoire de la branche 8 du clip 6 qui passe entre la base 3 et l'attache 1 est donc courbe, et cela permet à la dépression 9 ménagée dans la base 3 de présenter au moins partiellement la forme d'une cuvette, c'est-à-dire d'avoir une paroi 11 qui possède une courbure suivant d'aussi près que possible le parcours du clip 6 pendant ses mouvements. De cette façon, comme on le voit sur la figure 2, il est possible de limiter le volume de la dépression 9 renfermant l'attache 1 à une valeur minimale, avec une diminution de l'épaisseur de la base 3 de par exemple 0,4 à 0,1 mm qui est à la fois progressive et localisée. L'affaiblissement de l'a solidité de la base 3 dû à la présence de la dépression 9 est donc réduit à son strict minimum. On peut également conformer la partie inférieure de l'attache 1 de manière à lui faire suivre la courbure de la cuvette. Bien entendu, les zones de la dépression 9 qui ne peuvent interférer avec les mouvements du clip 6 peuvent avoir une forme plus quelconque, l'essentiel étant que le placement de l'attache 1 soit possible dans la dépression 9 pour diminuer l'encombrement en hauteur de l'ensemble attache 1/base 3.

Tout cela fait que par rapport aux configurations classiques ou à la configuration fictive de la figure 1, on peut diminuer l'encombrement global en hauteur de l'ensemble attache 1/clip 6/base 3 grâce à la dépression 9 sans pour autant compromettre la solidité de la base 3. L'appareil devient ainsi plus confortable à porter pour le patient, tout en conservant une excellente fiabilité.

En variante par rapport à l'exemple représenté, il serait possible de prévoir que le déplacement du clip 6 puisse s'effectuer en partie selon une translation rectiligne. Il faudrait alors prévoir une dépression 9 de forme différente, dont la paroi 11 serait parallèle à la direction de translation du clip 6, et on atténuerait quelque peu les avantages obtenus par rapport à une configuration où la trajectoire du clip 6 serait purement rotative. Néanmoins, le gain de confort pour le patient et de solidité pour la base 3 serait toujours significatif par rapport à la configuration exemplifiée sur la figure 1, d'autant que la direction de translation ne serait pas forcément horizontale : on conserverait alors le principe d'une diminution progressive et aussi localisée que possible de l'épaisseur de la base 3 au niveau de la dépression 9.

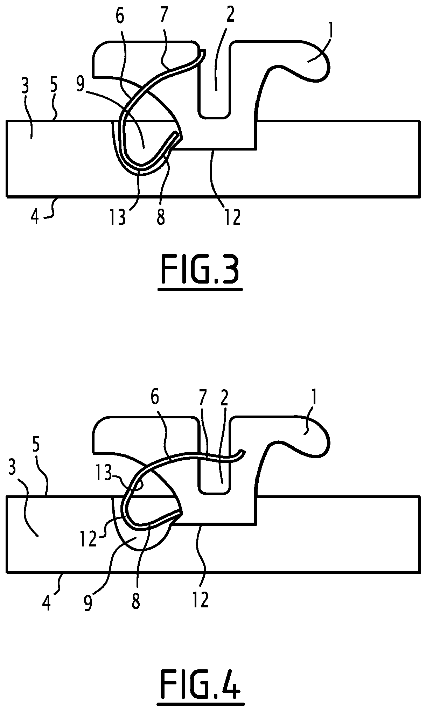

Les figures 3 et 4 représentent une variante de l'invention qui permet de rendre la partie la plus profonde de la dépression 9 encore plus localisée. La dépression 9 présente sur son fond un promontoire 12 sur lequel est placée l'attache 1. On voit sur la figure 3 que lorsque le clip 6 est en position ouverte, le sommet 13 de sa courbure vient se loger contre le fond de la dépression 9, donc à une altitude inférieure à celle du promontoire 11 sur lequel repose l'attache 1. Sur la figure 4, l'ensemble est représenté avec le clip 6 en position fermée. Dans cette variante, du fait de la présence du promontoire 12, la diminution d'épaisseur de l'ensemble attache 1/clip 6/base 3 est, pour des épaisseurs égales de l'attache 1 et de la base 3, moins importante que dans le cas de la figure 2. Cependant, cette configuration permet de réduire davantage la partie de la dépression 9 où la base 3 présente une réduction importante de son épaisseur et on obtient une base 3 plus solide. Bien entendu, on peut appliquer le principe de cette variante à un ensemble où le clip se déplacerait en partie selon un mouvement de translation rectiligne.

La conception et la réalisation de la base 3 de l'ensemble selon l'invention s'effectuent par les moyens de conception et de fabrication assistées par ordinateur classiquement utilisés.

L'invention peut être utilisée aussi bien pour des appareils de type lingual que pour des appareils de type vestibulaire.

## Revendications

1. Ensemble destiné à faire partie d'un appareil orthodontique, comportant :
une attache auto-ligaturante (1), ladite attache (1) présentant selon sa direction longitudinale une face externe et une face occlusale et étant pourvue sur sa face externe d'une gorge (2) pour la réception d'un arc orthodontique,
un clip élastique (6) déplaçable de manière réversible entre une position ouverte laissant un passage libre pour l'insertion de l'arc dans la gorge (2) ou l'extraction de l'arc hors de la gorge (2) et une position fermée obturant la gorge (2), et
une base (3) présentant une face externe (5) et une face occlusale (4), ladite face externe (5) de la base (3) supportant ladite attache (1) et ladite face occlusale (4) de la base (3) étant destinée à reposer sur une dent du patient en épousant la surface de ladite dent, et
ledit clip (6) est déplaçable selon un mouvement au moins partiellement rotatif entre sa position ouverte et sa position fermée
**caractérisé en ce que,**
ladite base (3) comporte dans la zone où elle supporte l'attache (1) une dépression (9) au moins partiellement en forme de cuvette, le clip (6) venant s'insérer dans ladite dépression (9) lorsqu'il est en position fermée.

2. Ensemble selon la revendication 1, **caractérisé en ce**
**qu'**il comporte des moyens pour que le déplacement du clip (6) entre lesdites positions s'effectue essentiellement selon un mouvement de rotation, sans glissement en translation rectiligne du clip (6).

3. Ensemble selon la revendication 1, **caractérisé en ce**
**qu'**il comporte des moyens pour que le déplacement du clip (6) entre lesdites positions s'effectue essentiellement selon un mouvement de rotation, puis de glissement en translation rectiligne du clip (6) ou inversement.

4. Ensemble selon l'une des revendications 1 à 3, **caractérisé en ce que**
le clip (6) est en forme de U sur au moins une partie de sa longueur.

5. Ensemble selon l'une des revendications 1 à 4, **caractérisé en ce que**
la dépression (9) de la base (3) présente sur son fond un promontoire (12) destiné à supporter l'attache (1).

6. Appareil orthodontique comportant un arc orthodontique et des ensembles comportant chacun une attache (1), un clip (6) et une base (3), destinés à être montés chacun sur une dent d'un patient, **caractérisé en ce que**
au moins un desdits ensembles est du type selon l'une des revendications 1 à 5.

## Patentansprüche

1. Anordnung, welche dazu bestimmt ist, Teil einer orthodontischen Vorrichtung zu sein, und aufweist:
ein selbstligierendes Bracket (1), wobei das Bracket (1) in seiner Längsrichtung eine Außenseite und eine okklusale Seite aufweist und auf seiner Außenseite mit einer Nut (2) für die Aufnahme eines orthodontischen Bogens versehen ist,
einen elastischen Clip (6), der reversibel verstellbar ist zwischen einer offenen Position, die einen freien Durchgang für das Einsetzen des Bogens in die Nut (2) oder das Herausziehen des Bogens aus der Nut (2) lässt, und einer geschlossenen Position, welche die Nut (2) verschließt, und
ein Unterteil (3), das eine Außenseite (5) und eine okklusale Seite (4) aufweist,
wobei die Außenseite (5) des Unterteils (3) das Bracket (1) stützt und die okklusale Seite (4) des Unterteils (3) dazu bestimmt ist, auf einem Zahn des Patienten zu ruhen und sich dabei an die Oberfläche dieses Zahns anzupassen, und
wobei der Clip (6) mit einer wenigstens teilweise drehenden Bewegung zwischen seiner offenen Position und seiner geschlossenen Position verstellbar ist,
**dadurch gekennzeichnet, dass**
das Unterteil (3) in dem Bereich, in dem es das Bracket (1) stützt, eine wenigstens teilweise wannenförmige Vertiefung (9) aufweist, wobei sich der Clip (6) in diese Vertiefung (9) einfügt, wenn er sich in der geschlossenen Position befindet.

2. Anordnung nach Anspruch 1, **dadurch gekennzeichnet, dass** sie Mittel dafür aufweist, dass die Verstellung des Clips (6) zwischen den Positionen im Wesentlichen durch eine Drehbewegung erfolgt, ohne Gleiten des Clips (6) in geradliniger Translation.

3. Anordnung nach Anspruch 1, **dadurch gekennzeichnet, dass** sie Mittel dafür aufweist, dass die Verstellung des Clips (6) zwischen den Positionen im Wesentlichen durch eine Dreh- und anschließend eine Gleitbewegung des Clips (6) in geradliniger Translation oder umgekehrt erfolgt.

4. Anordnung nach einem der Ansprüche 1 bis 3, **dadurch gekennzeichnet, dass** der Clip (6) auf wenigstens einem Teil seiner Länge U-förmig ist.

5. Anordnung nach einem der Ansprüche 1 bis 4, **dadurch gekennzeichnet, dass** die Vertiefung (9) des Unterteils (3) auf ihrem Boden einen Vorsprung (12) aufweist, der dazu bestimmt ist, das Bracket (1) zu stützen.

6. Orthodontische Vorrichtung, welche einen orthodontischen Bogen und Anordnungen, die jeweils ein Bracket (1), einen Clip (6) und ein Unterteil (3) aufweisen, umfassen und dazu bestimmt sind, jeweils auf einem Zahn eines Patienten angebracht zu werden, **dadurch gekennzeichnet, dass** wenigstens eine der Anordnungen von dem Typ nach einem der Ansprüche 1 bis 5 ist.

## Claims

1. An assembly intended to be part of an orthodontic apparatus and comprising:
a self-ligating bracket (1), said bracket (1) having in its longitudinal direction an outer face and an occlusal face and being provided on its outer face with a groove (2) for holding an orthodontic arch wire,
an elastic clip (6) that can be moved in a reversible manner between an open position, leaving a free passage for the insertion of the arch wire into the groove (2) or the extraction of the arch wire from the groove (2), and a closed position closing off the groove (2), and
a base (3) having an outer face (5) and an occlusal face (4), said outer face (5) of the base (3) supporting said bracket (1) and said occlusal face (4) of the base (3) being intended to rest on a patient's tooth by conforming to the surface of said tooth,
wherein said clip (6) can be moved in an at least partially rotary movement between its open position and its closed position,
**characterized in that**
said base (3) comprises, in the region where it supports the bracket (1), an at least partially dish-shaped depression (9), the clip (6) being inserted into said depression (9) when it is in the closed position.

2. The assembly as claimed in claim 1, **characterized in that** it comprises means such that the clip (6) is moved between said positions substantially by a rotational movement, without the clip (6) sliding in rectilinear translation.

3. The assembly as claimed in claim 1, **characterized in that** it comprises means such that the clip (6) is moved between said positions substantially by a rotational movement, with the clip (6) then sliding in rectilinear translation or vice versa.

4. The assembly as claimed in any one of the claims 1 to 3, **characterized in that** the clip (6) is U-shaped over at least a part of its length.

5. The assembly as claimed in any one of the claims 1 to 4, **characterized in that** the depression (9) in the base (3) has on its bottom a protrusion (12) intended to support the bracket (1).

6. An orthodontic apparatus comprising an orthodontic arch wire and assemblies which each comprise a bracket (1), a clip (6) and a base (3) that are each intended to be fitted to a patient's tooth, **characterized in that** at least one of said assemblies is of the type claimed in any one of the claims 1 to 5.
